# EUROPEAN PATENT SPECIFICATION

(11) **EP 3 984 772 B1**
(45) Date of publication and mention of the grant of the patent: **06.09.2023**
(21) Application number: 20821668.9
(22) Date of filing: 11.06.2020
(51) Int. Cl.: B60C 11/01, B60C 11/03, B60C 11/13, B60C 11/12

(54) **PNEUMATIC TIRE**
LUFTREIFEN
PNEUMATIQUE

(30) Priority: 12.06.2019 JP 2019109211
(43) Date of publication of application: 20.04.2022
(73) Proprietor: Bridgestone Corporation, Tokyo 104-8340 (JP)
(72) Inventor: SHIBATA, Yasuo, Tokyo 104-8340 (JP)
(74) Representative: Marks & Clerk LLP
(86) International application number: PCT/JP2020/023086
(87) International publication number: WO 2020/250991

(56) References cited:
- WO-A1-2017/058182
- WO-A1-2017/074459
- WO-A1-2017/103458
- FR-A1- 3 019 096
- FR-A1- 3 039 097
- JP-A- 2001 219 718
- JP-A- 2013 241 069
- JP-A- 2014 012 459
- JP-A- 2014 012 468
- JP-A- 2014 012 470
- US-A- 2 121 955

## Description

### [Technical Field]

The present invention relates to a pneumatic tire for use as a wheel of a vehicle.

### [Background Art]

A pneumatic tire that rotates while supporting a vehicle generates heat by friction thereof with a road surface and distortion (deformation) thereof that repetitively occurs, resulting in a rise of the temperature of the pneumatic tire.

Especially, in a tire for a heavy load that is used in a vehicle having a heavy vehicle body weight such as a truck or a bus, heat generation is great. Thus, heat tends to stay in the inside of the tire, and the temperature rise is remarkable.

As such, in a case of a tire in which a plurality of land portions extending in a tire circumferential direction are formed on a tread of the tire by being partitioned by a plurality of circumferential grooves that extend in a tire circumferential direction, proposed is a tire in which a ridge portion is formed in the circumferential grooves so as to protrude from a groove bottom of the circumferential groove (for example, refer to Patent Document 1).

If the tire rolls on the road surface, then air flows in a direction opposite to a rotation direction of the tire in the circumferential grooves and hits the ridge portions protruding in the circumferential grooves. Thereupon, the air gets over the ridge portions or generates a swirling current to promote heat radiation, especially from a periphery of the ridge portions of the circumferential grooves. Consequently, the temperature rise of the tire is suppressed.

### [Prior Art Document]

### [Patent Document]

Patent Document 1: WO2017/170208 A

In the tire disclosed in Patent Document 1, a projection (ridge portion) is formed in an outermost side circumferential groove of the circumferential grooves of the tread in an inclined relation with respect to a tire widthwise direction.

Further, on a first land portion on an inner side in the tire widthwise direction between land portions of the outermost side circumferential grooves, a shallow groove having a smaller groove depth is formed so as to be open to the circumferential groove in an inclined relation with respect to the tire widthwise direction.

A flow of air is generated in the shallow groove to suppress the temperature rise of the first land portion.

### [Summary of the Invention]

### [Underlying Problem to be solved by the Invention]

In Patent Document 1, on a second land portion (shoulder land portion) which corresponds to a shoulder land portion in a shoulder region of the tire, there is no shallow groove such as the shallow groove extending in an inclined relation with respect to the tire widthwise direction.

In a pneumatic tire, especially a tire for heavy load, the shoulder portion of the tire is liable to be deformed, and also the deformation amount is great.

Accordingly, especially the shoulder land portion within the tread is likely to generate heat through deformation that is repeated during traveling.

However, in Patent Document 1, since a widthwise groove is not present on the shoulder land portion, the shoulder land portion, which is likely to generate heat, of the tread cannot be cooled effectively. Attention is drawn to the disclosure of FR 3 019 096 A1, WO 2017/074459 A1, WO 2017/058182 A1, US 2 121 955 A, FR 3 039 097 A1, which show pneumatic tires comprising treads with shoulder lateral grooves with an increased width but with a conventional rather constant depth.

The present invention has been made in view of such a point as described above, and an object of the present invention is to provide a pneumatic tire in which a shoulder land portion, which is most likely to be deformed and generate heat, of a tread can be cooled effectively to suppress the temperature rise.

### [Means to solve the Problem]

In order to achieve the object described above, the present invention provides a pneumatic tire according to claim 1.

With the configuration described above, in a pneumatic tire in which widthwise grooves are formed on land portions formed by circumferential grooves on a tread, in at least the outermost side circumferential grooves among the plurality of circumferential grooves, a plurality of ridge portions are formed in a spaced relation with each other in the tire circumferential direction such that the plurality of ridge portions project from the groove bottom of the outermost side circumferential grooves and cross the outermost side circumferential grooves with an angle with respect to the tire circumferential direction, and at least one of the widthwise grooves on one of the land portions has, on a groove bottom thereof, a widened groove portion having an increased groove width. Thus, air that flows in the direction opposite to the tire rotation direction in the outermost side circumferential groove by rolling of the tire hits the ridge portion, whereupon swirling current and so forth are generated. Then, the air easily flows into an opening, which is open to the outermost side circumferential groove, of the widthwise groove that includes the widened groove portion formed at least on the shoulder land portion of the land portions and then flows along the widthwise groove of the shoulder land portion. Consequently, the air can effectively cool the shoulder land portion, which is liable to generate heat, and thereby suppress temperature rise of the tire.

Even in a case where the land portion touches with the ground to cause compression deformation of the land portion or elastic deformation such as falling down of the land portion and thereby close the groove portion on a treading face side of the widthwise groove on the land portion, the space of the widened groove portion on the groove bottom is always reserved. Thus, the flow of air is not disturbed, and the air cooling effect can be maintained.

Further, the widthwise groove on the land portion also has a draining property and can promote drainage to thereby secure frictional force (wet grip performance).

In a preferred embodiment of the present invention,
a protruding end face of a corresponding one of the ridge portions is present in a corresponding one of the circumferential grooves, and a height of the protruding end face from a groove bottom of the circumferential groove is at a position higher than that of a groove bottom of a widened groove portion of a corresponding one of the widthwise grooves.

With the present configuration, since the protruding end face of the ridge portion is present in the circumferential groove and the height of the protruding end face from the groove bottom of the circumferential groove is at a position higher than that of the groove bottom of the widened groove portion of corresponding one of the widthwise grooves, air that flows in the direction opposite to the tire rotation direction in the outermost side circumferential groove hits the ridge portion and thus can efficiently flow into the opening of the widened groove portion positioned on the groove bottom of the widthwise groove positioned lower than the ridge portion. Consequently, at least the flow amount of air that flows in the widthwise groove of the shoulder land portion can be increased to thereby promote cooling of the shoulder land portion.

In the preferred embodiment of the present invention,
to the circumferential groove between the ridge portions that are adjacent to each other in the tire circumferential direction, at least one of the widthwise grooves of the land portion on one end side in the tire widthwise direction of the ridge portions is open.

With the present configuration, since, to the circumferential groove between the ridge portions that are adjacent to each other in the tire circumferential direction, at least one of the widthwise grooves of the land portion on one end side in the tire widthwise direction of the ridge portions is open, air that flows in the direction opposite to the tire rotation direction in the circumferential groove hits the ridge portion and can flow into at least one of the widthwise grooves to thereby efficiently cool the entire land portion.

In the preferred embodiment of the present invention,
the widened groove portion of the widthwise groove on the shoulder land portion has a groove width that gradually decreases toward the outer side in the tire widthwise direction from a portion at which the widthwise groove is open to the outermost side circumferential groove.

With the present configuration, since the widened groove portion of the widthwise groove on the shoulder land portion has the groove width that gradually decreases toward the outer side in the tire widthwise direction from the portion at which the widthwise groove is open to the outermost side circumferential groove, when air flowing in the direction opposite to the tire rotation direction in the outermost side circumferential groove hits the ridge portions and flows into the widthwise groove of the shoulder land portion, then the air having flown especially into the widened groove portion of the widthwise groove flows by gradually increasing the flow speed in the widened groove portion whose groove width gradually decreases toward the outer side in the tire widthwise direction. By this, the air cooling effect can be increased.

According to the present invention,
the widthwise groove on the shoulder land portion has a groove depth that gradually increases toward the outer side in the tire widthwise direction from a portion at which the widthwise groove is open to the outermost side circumferential groove to at least a tire widthwise direction position of a belt tire widthwise end edge positioned in the shoulder region of a belt of a belt layer arranged on the inner side in a tire diametrical direction of the tread.

With the present configuration, since the widthwise groove on the shoulder land portion has the groove depth that gradually increases toward the outer side in the tire widthwise direction from the portion at which the widthwise groove is open to the outermost side circumferential groove to at least the tire widthwise direction position of the belt tire widthwise end edge positioned in the shoulder region of the belt of the belt layer arranged on the inner side in the tire diametrical direction of the tread, the widthwise groove is formed such that the groove bottom thereof approaches the belt tire widthwise end edge positioned in the shoulder region in which the distortion occurring in the shoulder land portion is especially great and heat is liable to be generated most. Thus, air that flows in the widthwise groove can efficiently cool a region of the shoulder land portion in the proximity of the belt tire widthwise end edge.

In the preferred embodiment of the present invention,
the ridge portion provided in the outermost side circumferential groove is inclined with respect to the tire widthwise direction such that, compared with one end portion of the ridge portion on the shoulder land portion side, the other end portion of the ridge portion is positioned at a position advanced in a tire rotation direction upon vehicle forward movement.

With the present configuration, since the ridge portion provided in the outermost side circumferential groove is inclined with respect to the tire widthwise direction such that, compared with one end portion of the ridge portion on the shoulder land portion side, the other end portion of the ridge portion is positioned at a position advanced in a tire rotation direction upon vehicle forward movement, air flowing in the direction opposite to the tire rotation direction upon vehicle forward movement in the outermost side circumferential groove is guided to the shoulder land portion side by the inclined ridge portion. Consequently, the air can easily flow into the widthwise groove of the shoulder land portion and further improve the air cooling effect.

### [Effects of the Invention]

According to the present invention, in a pneumatic tire in which widthwise grooves are formed on land portions formed by circumferential grooves on a tread of the tire, in at least the outermost side circumferential grooves among the plurality of circumferential grooves, a plurality of ridge portions are formed in a spaced relation with each other in the tire circumferential direction such that the plurality of ridge portions project from the groove bottom of the outermost side circumferential grooves and cross the outermost side circumferential grooves with an angle with respect to the tire circumferential direction, and at least one of the widthwise grooves on at least one of land portions has, on a groove bottom thereof, a widened groove portion having an increased groove width. Thus, air that flows in the direction opposite to the tire rotation direction in the outermost side circumferential groove by rolling of the tire hits the ridge portion, whereupon swirling current and so forth are generated. Then, the air easily flows into the opening, which is open to the outermost side circumferential groove, of the widthwise groove that includes the widened groove portion formed at least on the shoulder land portion of the land portion, and then flows along the widthwise groove of the shoulder land portion. Consequently, the air can cool the shoulder land portion, which is liable to generate heat, to suppress the temperature rise of the tire effectively.

Even in a case where the land portion touches the ground to cause compression deformation of the land portion or elastic deformation such as falling down of the land portion and closing of the groove portion of the widthwise groove on the land portion other than the widened groove portion, the space of the widened groove portion on the groove bottom is always reserved. Thus, a flow of air is not disturbed, and the air cooling effect can be maintained.

Further, the widthwise groove on the land portion also has a draining property and can promote drainage to thereby secure frictional force (wet grip performance).

### [Brief Description of Drawings]

FIG. 1 is a tire widthwise cross sectional view of a pneumatic tire according to an embodiment of the present invention.
FIG. 2 is a partial plan view of a tread of the pneumatic tire.
FIG. 3 is a partial perspective view of the tread.
FIG. 4 is a partial enlarged plan view of the tread.
FIG. 5 is a partial cross sectional view of the pneumatic tire.

### [Mode for carrying out the Invention]

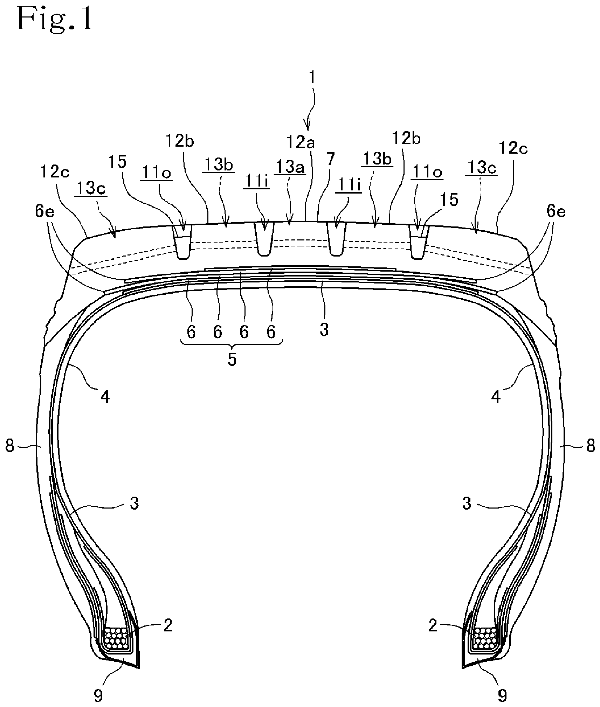

In the following, an embodiment according to the present invention is described with reference to FIGS. 1 to 5.

FIG. 1 is a tire widthwise direction cross sectional view of a pneumatic tire 1 (cross sectional view when the pneumatic tire 1 is taken along a plane including a tire rotation center axis) that is a radial tire for heavy load for a truck or a bus according to the present embodiment.

The pneumatic tire 1 includes a pair of left and right bead rings 2 each formed from a metal wire wound in a ring shape and a carcass ply 3 formed with the opposite side edges thereof wound on the bead rings 2 while a portion thereof between the opposite sides edges swells to an outer side in a tire diametrical direction such that the carcass ply 3 has a toroidal shape.

An air permeability resistant inner liner portion 4 is formed on an inner surface of the carcass ply 3.

A plurality of belts 6 are placed on one another and wound on an outer periphery of a crown portion of the carcass ply 3 to form a belt layer 5, and a tread 7 is formed on the outer side of the belt layer 5 in the tire diameter direction in such a manner as to cover the belt layer 5.

The belt layer 5 is formed from the belts 6 placed one on another in a plurality of layers, and each belt 6 is formed from belt cords covered with belt rubber and formed in a belt shape.

A side wall portion 8 is formed on the outer surface of the opposite side portions of the carcass ply 3.

A bead portion 9 covering an annular end portion of the carcass ply 3 and being wound and folded back on each bead ring 2 is continuous on the inner side thereof to the inner liner portion 4 and on the outer side thereof to the side wall portion 8.

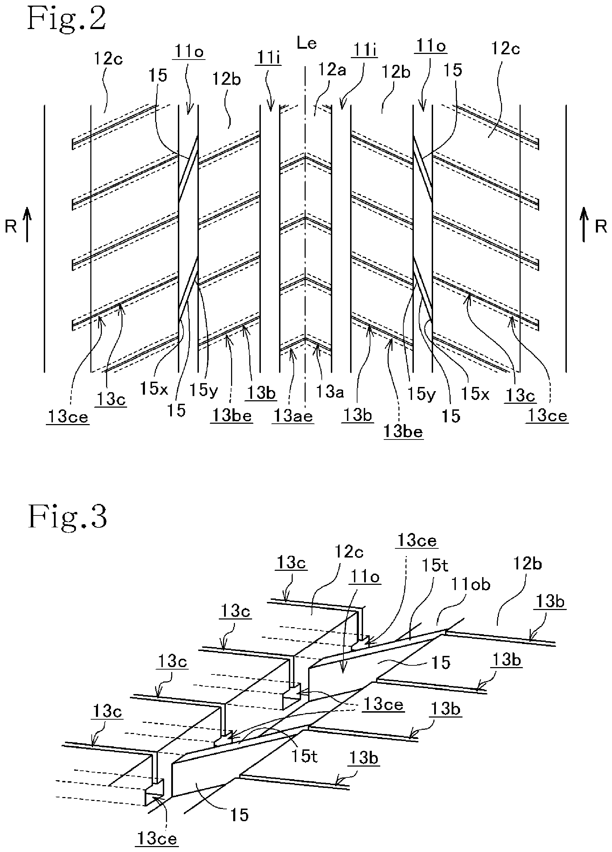

Referring to FIG. 1 and FIG. 2 that is a partial plan view of the tread 7, on each of the opposite sides of a tire equator line Le at the center in the tire widthwise direction of the tread 7, two circumferential grooves 11i and 11o are formed at substantially equal intervals in the tire widthwise direction on the tread 7 so as to extend in a tire circumferential direction.

The four circumferential grooves 11o, 11i, 11i, and 11o include the inner side circumferential grooves 11i on the inner side in the tire widthwise direction near to the tire equator line Le and the outer side circumferential grooves 11o on the outer sides in the tire widthwise direction of the inner side circumferential grooves 11i.

Five land portions 12c, 12b, 12a, 12b, and 12c are formed such that they are partitioned by the four circumferential grooves 11o, 11i, 11i, and 11o and extend in the tire circumferential direction.

One center land portion 12a is formed in the middle in the tire widthwise direction in which the tire equator line Le is present, and the second land portions 12b are formed across the inner side circumferential grooves 11i on the opposite sides in the tire widthwise direction of the center land portion 12a.

Further, the shoulder land portions 12c are formed in shoulder regions on the outer sides in the tire widthwise direction of the outer side circumferential grooves 11o that are outermost side circumferential grooves.

On the land portions 12c, 12b, 12a, 12b, and 12c, a plurality of widthwise grooves 13c, 13b, 13a, 13b, and 13c are formed, respectively, such that they extend in the tire widthwise direction.

The widthwise grooves 13c, 13b, 13a, 13b, and 13c each have widened groove portions 13ce, 13be, 13ae, 13be, and 13ce being formed on the groove bottom and having an increased groove width, respectively.

The widened groove portions 13ce, 13be, 13ae, 13be, and 13ce have cross sections of a rectangular shape (refer to FIG. 3).

The widthwise groove 13a of the center land portion 12a extends in an obliquely inclined relation in a direction opposite to a tire rotation direction R (direction indicated by an arrow mark in FIG. 2) upon vehicle forward movement toward the opposite sides from the tire equator line Le to the inner side circumferential grooves 11i on the opposite sides and are formed symmetrically with respect to the tire equator line Le.

The widthwise groove 13b of the second land portion 12b extends in an obliquely inclined relation in the direction opposite to the tire rotation direction R from the inner side circumferential groove 11i to the outer side circumferential groove 11o.

The widthwise groove 13c of the shoulder land portion 12c extends in an obliquely inclined relation in the direction opposite to the tire rotation direction R from the outer side circumferential groove 11o to an end face in the widthwise direction of the shoulder land portion 12c.

On one side of the tire equator line Le of the tread 7, the widthwise grooves 13a, 13b, and 13c extend substantially in parallel to each other.

The widthwise grooves 13b and the widthwise grooves 13c on the opposite sides of the tire equator line Le are symmetrical to each other with respect to the tire equator line Le.

In the outer side circumferential groove 11o that is an outermost side circumferential groove located on the most outer side in the tire widthwise direction, a plurality of ridge portions 15 of a flat plate shape are formed in a spaced relation with each other in the tire circumferential direction such that they project from a groove bottom 11ob of the outer side circumferential groove 11o and cross the outer side circumferential groove 11o with an angle with respect to the tire circumferential direction.

Referring to FIG. 2, the ridge portion 15 extends in an obliquely inclined relation in the direction opposite to the tire rotation direction R from the second land portion 12b to the shoulder land portion 12c.

In particular, the ridge portion 15 provided in the outer side circumferential groove 11o is inclined with respect to the tire widthwise direction such that, compared with one end portion 15x of the ridge portion 15, the other end portion 15y is positioned at a position advanced in the tire rotation direction R.

The ridge portion 15 is steeply sloped such that the inclination angle thereof with respect to the tire widthwise direction is greater than that of the widthwise grooves 13b and 13c on the opposite sides of the ridge portion 15.

Referring to FIG. 3, the ridge portion 15 is present in the outer side circumferential groove 11o, and a protruding end face 15t of the ridge portion 15 is positioned higher than a groove bottom of the widened groove portion 13ce of the widthwise groove 13c of the shoulder land portion 12c although the height thereof from the groove bottom 11ob of the outer side circumferential groove 11o does not reach the treading face 7f of the tread 7.

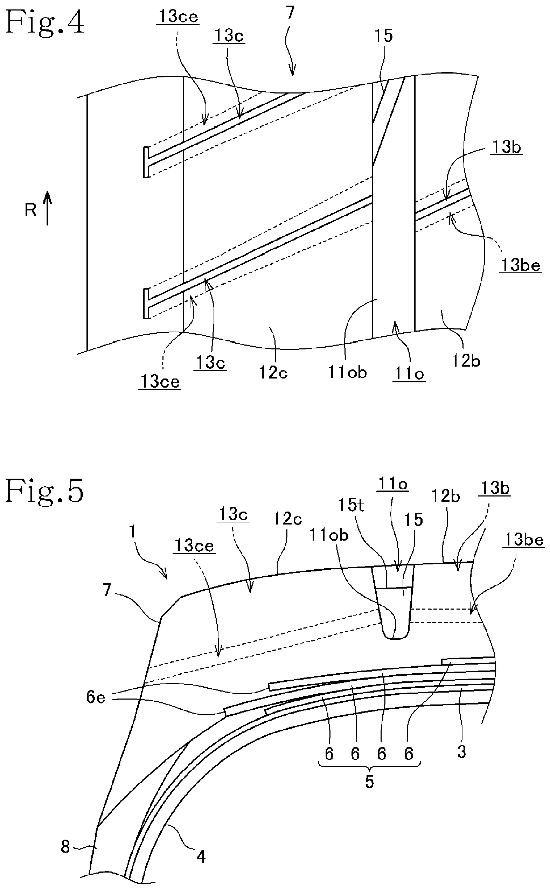

Referring to FIGS. 4 and 5, the widthwise groove 13c of the shoulder land portion 12c extends obliquely in the tire widthwise direction from a location at which the widthwise groove 13c is open to the outer side circumferential groove 11o. Further, the widthwise groove 13c further extends to an outer side face of the shoulder land portion 12c, passing the tire widthwise direction position of a belt tire widthwise end edge 6e positioned in the shoulder region of the belt 6 configuring the belt layer 5.

Referring to FIGS. 2 and 3, two widthwise grooves 13c of the shoulder land portion 12c are open to and communicate with the outer side circumferential groove 11o between the ridge portions 15 adjacent to each other in the tire circumferential direction.

Referring to FIG. 4, the widened groove portion 13ce of the widthwise groove 13c of the shoulder land portion 12c has a groove width that gradually decreases toward the outer side in the tire widthwise direction from the location at which the widened groove portion 13ce is open to the outer side circumferential groove 11o, to the tire widthwise direction position of the belt tire widthwise end edge 6e of the belts 6 of the belt layer 5 arranged on the inner side in the tire diametrical direction of the tread 7.

Further, referring to FIG. 5, the widthwise groove 13c of the shoulder land portion 12c has a groove depth that gradually increases toward the outer side in the tire widthwise direction from a location at which the widthwise groove 13c is open to the outer side circumferential groove 11o to at least the tire widthwise direction position of the belt tire widthwise end edge 6e positioned in the shoulder region.

With the embodiment of the pneumatic tire according to the present invention having been described in detail above, the following advantageous effects are achieved.

When the pneumatic tire 1 rotates upon vehicle traveling, air flows in the direction opposite to the tire rotation direction R upon vehicle forward movement in the four circumferential grooves 11o, 11i, 11i, and 11o of the tread 7, and part of the air advances into and passes through the widthwise grooves 13c, 13b, 13a, 13b, and 13c, whereupon it can cool the land portions 12c, 12b, 12a, 12b, and 12c and thereby suppress the temperature rise of the tread 7.

As depicted in FIG. 2, the widthwise grooves 13c, 13b, 13a, 13b, and 13c have the widened groove portions 13ce, 13be, 13ae, 13be, and 13ce, respectively, and even if, at the time of touching the ground, the widthwise grooves 13c, 13b, 13a, 13b, and 13c are closed on the treading face side thereof and suppress deterioration of the rigidity, the widened groove portions 13ce, 13be, 13ae, 13be, and 13ce are always reserved. Consequently, the flow of air is not disturbed, and the air cooling effect can be maintained.

Further, the widthwise grooves 13c, 13b, 13a, 13b, and 13c of the land portions 12c, 12b, 12a, 12b, and 12c also have a draining property and can promote drainage to thereby secure frictional force (wet grip performance).

The pneumatic tire 1 that is a tire for a heavy load is liable to be deformed at the shoulder portions thereof, and also the deformation amount there is great.

Referring to FIG. 5, the shoulder land portion 12c of the tread 7 is liable to generate heat, by deformation thereof repeated during travelling, most especially at a portion thereof in the proximity of the belt tire widthwise end edge 6e positioned in the shoulder region of the belts 6 of the belt layer 5.

As depicted in FIG. 3, air that flows in the direction opposite to the tire rotation direction R in the outer side circumferential groove 11o by rolling of the pneumatic tire 1 hits the ridge portion 15, whereupon swirling current and so forth are generated. Then, the air easily flows into the opening, which is opposed to the outer side circumferential groove 11o, of the widthwise groove 13c that includes the widened groove portion 13ce formed on the shoulder land portion 12c, and then flows along the widthwise groove 13c of the shoulder land portion 12c. Consequently, the air can effectively cool the shoulder land portion 12c, which is liable to generate heat, and thereby suppress the temperature rise of the tire.

As depicted in FIG. 3, although the protruding end face 15t of the ridge portion 15 is present in the outer side circumferential groove 11o and the height of the protruding end face 15t from the groove bottom 11ob of the outer side circumferential groove 11o does not reach the treading face 7f of the tread 7, since the protruding end face 15t is positioned higher than the groove bottom of the widened groove portion 13ce of the widthwise groove 13c of the shoulder land portion 12c, air that flows in the direction opposite to the tire rotation direction R in the outer side circumferential groove 11o hits the ridge portion 15 to generate swirling current and so forth and thus can efficiently flow into the opening of the widened groove portion 13ce positioned on the groove bottom of the widthwise groove 13c positioned lower than the protruding end face 15t of the ridge portion 15. Consequently, the flow amount of air that flows in the widthwise groove 13c of the shoulder land portion 12c can be increased to thereby promote cooling of the shoulder land portion 12c.

As depicted in FIGS. 2 and 3, since two widthwise grooves 13c of the shoulder land portion 12c are open to and communicate with the outer side circumferential groove 11o between the ridge portions 15 adjacent to each other in the tire circumferential direction, air flowing in the direction opposite to the tire rotation direction in the outer side circumferential groove 11o hits the ridge portions 15 and can flow into the two widthwise grooves 13c to thereby efficiently cool the entire shoulder land portion 12c.

Further, since the widened groove portion 13ce of the widthwise groove 13c of the shoulder land portion 12c has a groove width that gradually decreases toward the outer side in the tire widthwise direction from the portion at which the widened groove portion 13ce is open to the outer side circumferential groove 11o to at least the tire widthwise direction position of the belt tire widthwise end edge 6e as depicted in FIG. 4, when air flowing in the direction opposite to the tire rotation direction R in the outer side circumferential groove 11o hits the ridge portions 15 and flows into the widthwise groove 13c of the shoulder land portion 12c, then the air having flown especially into the widened groove portion 13ce of the widthwise groove 13c flows by gradually increasing the flow speed in the widened groove portion 13ce whose groove width gradually decreases to the outer sides in the tire widthwise direction. By this, the air cooling effect can be increased.

Further, since the groove depth of the widthwise groove 13c of the shoulder land portion 12c gradually increases toward the outer side in the tire widthwise direction from the portion at which the widthwise groove 13c is open to the outer side circumferential groove 11o to at least the belt tire widthwise end edge 6e positioned in the shoulder region of the belts 6 of the belt layer 5 as depicted in FIG. 5, the widthwise groove 13c is formed so as to approach the belt tire widthwise end edge 6e positioned in the shoulder region in which the distortion occurring in the shoulder land portion 12c is especially great and heat is liable to be generated most. Thus, air that flows in the widthwise groove 13c can efficiently cool a region of the shoulder land portion 12c in the proximity of the belt tire widthwise end edge 6e where heat is liable to be generated most.

As depicted in FIG. 2, the ridge portion 15 provided in the outermost side circumferential groove 11o is inclined with respect to the tire widthwise direction such that the other end portion 15y thereof on the second land portion 12b side is located at a position advanced in the tire rotation direction R upon vehicle forward movement from the one end portion 15x thereof on the shoulder land portion 12c side. Thus, air flowing in the direction opposite to the tire rotation direction R upon vehicle forward movement in the outermost side circumferential groove 11o is guided to the shoulder land portion 12c side by the inclined ridge portion 15. Consequently, the air can easily flow into the widthwise groove 13c of the shoulder land portion 12c and further improve the air cooling effect.

While the pneumatic tire 1 according to the embodiment of the present invention has been described, the present invention is not limited to the embodiment described above but it is solely defined by the scope of the appended claims.

For example, although the ridge portion formed in the circumferential direction groove is in the form of a flat plate inclined with an angle with respect to the tire circumferential direction, it may otherwise have a curved face at part thereof.

Further, although, in the present embodiment, the widened groove portion provided on the groove bottom of the widthwise direction groove formed on the land portion has a rectangular cross section, it may otherwise have a circular or oval cross section.

Although the widthwise grooves formed on the land portions are formed symmetrical with respect to the tire equator line Le, they may not be formed symmetrical with respect to the tire equator line Le.

Furthermore, although the widthwise grooves formed on the land portions are formed linearly, they may otherwise be formed in a zigzag bent pattern.

### [Reference Signs List]

Le: Tire equator line
1: Tire
2: Bead ring
3: Carcass ply
4: Inner liner portion
5: Belt layer
6: Belt
6e: Belt tire widthwise end edge
7: Tread
7f: Treading face
8: Side wall portion
9: Bead portion
11i: Inner side circumferential groove
11o: Outer side circumferential groove
11ob: Groove bottom
12a: Center land portion
12b: Second land portion
12c: Shoulder land portion
13a, 13b, 13c: Widthwise groove
13ae, 13be, 13ce: Widened groove portion
15: Ridge portion
15t: Protruding end face.

## Claims

1. A pneumatic tire comprising:
a plurality of land portions (12c, 12b, 12a, 12b, 12c) formed on a tread (7) of the tire and partitioned by a plurality of circumferential grooves (11o, 11i, 11i, 11o) that extend in a tire circumferential direction, the plurality of land portions (12c, 12b, 12a, 12b, 12c) extending in the tire circumferential direction; and
a plurality of widthwise grooves (13c, 13b, 13a, 13b, 13c) that are formed on the land portions (12c, 12b, 12a, 12b, 12c) and that extend in a tire widthwise direction, wherein
in at least the outermost side circumferential grooves (11o, 11o) on outermost sides in the tire widthwise direction among the plurality of circumferential grooves (11o, 11i, 11i, 11o), a plurality of ridge portions (15, 15) are formed in a spaced relation with each other in the tire circumferential direction such that the plurality of ridge portions (15, 15) project from a groove bottom of the outermost side circumferential grooves (11o, 11o) and cross the outermost side circumferential grooves (11o, 11o) with an angle with respect to the tire circumferential direction,
at least one of the widthwise grooves (13c, 13c) on at least the shoulder land portions (12c, 12c) in a shoulder region on an outer side of one of the outermost side circumferential grooves (11o, 11o) has, on a groove bottom thereof, a widened groove portion (13ce, 13ce) having an increased groove width, **characterized in that**
the widthwise groove (13c) on the shoulder land portion (12c) has a groove depth that gradually increases toward the outer side in the tire widthwise direction from a portion at which the widthwise groove (13c) is open to the outermost side circumferential groove (11o) to at least a tire widthwise direction position of a belt tire widthwise end edge (6e) positioned in the shoulder region of a belt (6) of a belt layer (5) arranged on an inner side in a tire diametrical direction of the tread (7) .

2. The pneumatic tire according to claim 1, wherein a protruding end face (15t) of a corresponding one of the ridge portions (15) is present in a corresponding one of the circumferential grooves (11o), and a height of the protruding end face (15t) from a groove bottom (11ob) of the circumferential groove (11o) is at a position higher than that of a groove bottom of the widened groove portion (13ce) of a corresponding one of the widthwise grooves (13c).

3. The pneumatic tire according to claim 2, wherein, to the circumferential groove (11o) between the ridge portions (15, 15) that are adjacent to each other in the tire circumferential direction, at least one of the widthwise grooves (13c, 13c) of the land portion (12c) on one end side in the tire widthwise direction of the ridge portions (15, 15) is open.

4. The pneumatic tire according to claim 3, wherein the widened groove portion (13ce) of the widthwise groove (13c) on the shoulder land portion (12c) has a groove width that gradually decreases toward the outer side in the tire widthwise direction from a portion at which the widthwise groove (13c) is open to the outermost side circumferential groove (11o).

5. The pneumatic tire according to claim 4, wherein the ridge portion (15) provided in the outermost side circumferential groove (11o) is inclined with respect to the tire widthwise direction such that, compared with one end portion (15x) of the ridge portion (15) on the shoulder land portion side, the other end portion (15y) of the ridge portion (15) is positioned at a position advanced in a tire rotation direction (R) upon vehicle forward movement.

## Patentansprüche

1. Luftreifen, der Folgendes umfasst:
eine Vielzahl von Stegabschnitten (12c, 12b, 12a, 12b, 12c), die auf einer Lauffläche (7) des Reifens ausgebildet und durch eine Vielzahl von umlaufenden Rillen (11o, 11i, 11i, 11o), die sich in einer Reifenumfangsrichtung erstrecken, unterteilt sind, wobei sich die Vielzahl von Stegabschnitten (12c, 12b, 12a, 12b, 12c) in der Reifenumfangsrichtung erstreckt; und
eine Vielzahl von Breitenrichtungsrillen (13c, 13b, 13a, 13b, 13c), die auf den Stegabschnitten (12c, 12b, 12a, 12b, 12c) ausgebildet sind und die sich in einer Reifenbreitenrichtung erstrecken, wobei
in mindestens den äußersten seitlichen umlaufenden Rillen (11o, 11o) auf in der Reifenbreitenrichtung äußersten Seiten unter der Vielzahl von umlaufenden Rillen (11o, 11i, 11i, 11o) eine Vielzahl von Gratabschnitten (15, 15) in einer Abstandsbeziehung zueinander in der Reifenumfangsrichtung derart ausgebildet ist, dass die Vielzahl von Gratabschnitten (15, 15) von einer Rillensohle der äußersten seitlichen umlaufenden Rillen (11o, 11o) vorspringt und die äußersten seitlichen umlaufenden Rillen (11o, 11o) mit einem Winkel in Bezug auf die Reifenumfangsrichtung kreuzt,
mindestens eine der Breitenrichtungsrillen (13c, 13c) auf mindestens den Schulter-Stegabschnitten (12c, 12c) in einem Schulterbereich auf einer äußeren Seite einer der äußersten seitlichen umlaufenden Rillen (11o, 11o), auf einer Rillensohle davon, einen verbreiterten Rillenabschnitt (13ce, 13ce) aufweist, der eine gesteigerte Rillenbreite aufweist, **dadurch gekennzeichnet, dass**
die Breitenrichtungsrille (13c) auf dem Schulter-Stegabschnitt (12c) eine Rillentiefe aufweist, die zu der in der Reifenbreitenrichtung äußeren Seite hin von einem Abschnitt, an dem die Breitenrichtungsrille (13c) zu der äußersten seitlichen umlaufenden Rille (11o) offen ist, bis zu mindestens einer Position in Reifenbreitenrichtung einer Gürtelendkante (6e) in Reifenbreitenrichtung, die in dem Schulterbereich eines Gürtels (6) einer Gürtellage (5) positioniert ist, die auf einer in einer Reifendurchmesserrichtung inneren Seite der Lauffläche (7) angeordnet ist, allmählich zunimmt.

2. Luftreifen nach Anspruch 1, wobei eine vorspringende Endfläche (15t) eines entsprechenden der Gratabschnitte (15) in einer entsprechenden der umlaufenden Rillen (11o) vorhanden ist, und sich eine Höhe der vorspringenden Endfläche (15t) von einer Rillensohle (11ob) der umlaufenden Rille (11o) an einer Position, höher als diejenige einer Rillensohle des verbreiterten Rillenabschnitts (13ce) einer entsprechenden der Breitenrichtungsrillen (13c), befindet.

3. Luftreifen nach Anspruch 2, wobei, zu der umlaufenden Rille (11o) zwischen den Gratabschnitten (15, 15), die zueinander in der Reifenumfangsrichtung angrenzend sind, mindestens eine der Breitenrichtungsrillen (13c, 13c) des Stegabschnitts (12c) auf einer Endseite in der Reifenbreitenrichtung der Gratabschnitte (15, 15) offen ist.

4. Luftreifen nach Anspruch 3, wobei der verbreiterte Rillenabschnitt (13ce) der Breitenrichtungsrille (13c) auf dem Schulter-Stegabschnitt (12c) eine Rillenbreite aufweist, die zu der in der Reifenbreitenrichtung äußeren Seite hin von einem Abschnitt, an dem die Breitenrichtungsrille (13c) zu der äußersten seitlichen umlaufenden Rille (11o) offen ist, allmählich abnimmt.

5. Luftreifen nach Anspruch 4, wobei, der Gratabschnitt (15), der in der äußersten seitlichen umlaufenden Rille (11o) bereitgestellt ist, in Bezug auf die Reifenbreitenrichtung derart geneigt ist, dass, verglichen mit einem Endabschnitt (15x) des Gratabschnitts (15) auf der Seite des Schulter-Stegabschnitts, der andere Endabschnitt (15y) des Gratabschnitts (15) an einer Position positioniert ist, die in einer Reifenrotationsrichtung (R) bei einer Fahrzeug-Vorwärtsbewegung vorgerückt ist.

## Revendications

1. Pneumatique, comprenant :
une pluralité de parties d'appui (12c, 12b, 12a, 12b, 12c) formées sur une bande de roulement (7) du pneumatique et séparées par une pluralité de rainures circonférentielles (11o, 11i, 11i, 11o) qui s'étendent dans une direction circonférentielle du pneumatique, la pluralité de parties d'appui (12c, 12b, 12a, 12b, 12c) s'étendant dans la direction circonférentielle du pneumatique ; et
une pluralité de rainures dans le sens de la largeur (13c, 13b, 13a, 13b, 13c) qui sont formées sur les parties d'appui (12c, 12b, 12a, 12b, 12c) et qui s'étendant dans une direction de la largeur du pneumatique, dans lequel
dans au moins les rainures circonférentielles du côté externe extrême (11o, 11o), sur des côtés externes extrêmes, dans la direction de la largeur du pneumatique, parmi la pluralité de rainures circonférentielles (11o, 11i, 11i,11o), une pluralité de parties de nervure (15, 15) sont formées dans une relation espacée les unes des autres dans la direction circonférentielle du pneumatique, de sorte que la pluralité de parties de nervure (15, 15) débordent d'un fond de rainure des rainures circonférentielles du côté externe extrême (11o, 11o) et croisent les rainures circonférentielles du côté externe extrême (11o, 11o) à un angle par rapport à la direction circonférentielle du pneumatique,
au moins une des rainures dans le sens de la largeur (13c, 13c) sur au moins les parties d'appui d'épaulement (12c, 12c), dans une région d'épaulement sur un côté externe d'une des rainures circonférentielles du côté externe extrême (11o, 11o), comporte, sur un fond de rainure de celle-ci, une partie de rainure élargie (13ce, 13ce) ayant une largeur de rainure accrue, **caractérisé en ce que**
la rainure dans le sens de la largeur (13c) sur la partie d'appui d'épaulement (12c) a une profondeur de rainure qui est progressivement accrue vers le côté externe, dans la direction de la largeur du pneumatique, d'une partie au niveau de laquelle la rainure dans le sens de la largeur (13c) est ouverte vers la rainure circonférentielle du côté externe extrême (11o) vers au moins une position, dans une direction de la largeur du pneumatique, d'un bord d'extrémité d'une ceinture (6e), dans la direction de la largeur du pneumatique positionné dans la région d'épaulement d'une ceinture (6) d'une couche de ceinture (5) agencée sur un côté interne, dans une direction diamétrale du pneumatique, de la bande de roulement (7).

2. Pneumatique selon la revendication 1, dans lequel une face d'extrémité en saillie (15t) d'une partie correspondante des parties de nervure (15) est présente dans une rainure correspondante des rainures circonférentielles (11o), et une hauteur de la face d'extrémité en saillie (15t) depuis un fond de rainure (11ob) de la rainure circonférentielle (11o) se situe au niveau d'une position plus élevée que celle d'un fond de rainure de la partie de rainure élargie (13ce) d'une rainure correspondante des rainures dans le sens de la largeur (13c).

3. Pneumatique selon la revendication 2, dans lequel, vers la rainure circonférentielle (11o) entre les parties de nervure (15, 15) qui sont adjacentes les unes aux autres dans la direction circonférentielle du pneumatique, au moins une des rainures dans le sens de la largeur (13c, 13c) de la partie d'appui (12c) sur un côté d'extrémité, dans la direction de la largeur du pneumatique, des parties de nervure (15, 15), est ouverte.

4. Pneumatique selon la revendication 3, dans lequel la partie de rainure élargie (13ce) de la rainure dans le sens de la largeur (13c) sur la partie d'appui d'épaulement (12c) a une largeur de rainure qui est progressivement réduite vers le côté externe, dans la direction de la largeur du pneumatique, d'une partie au niveau de laquelle la rainure dans le sens de la largeur (13c) est ouverte vers la rainure circonférentielle du côté externe extrême (11o).

5. Pneumatique selon la revendication 4, dans lequel la partie de nervure (15) fournie dans la rainure circonférentielle du côté externe extrême (11o) est inclinée par rapport à la direction de la largeur du pneumatique, de sorte que, en comparaison avec une partie d'extrémité (15x) de la partie de nervure (15) sur le côté de la partie d'appui d'épaulement, l'autre partie d'extrémité (15y) de la partie de nervure (15) et positionnée au niveau d'une position avancée dans une direction de rotation du pneumatique (R) lors du déplacement vers l'avant du véhicule.
